Europäisches Patentamt

European Patent Office

Office européen des brevets

(19)

(11) Numéro de publication : **0 316 220 B1**

## FASCICULE DE BREVET EUROPEEN

(12)

(45) Date de publication du fascicule du brevet :
**21.08.91 Bulletin 91/34**

(51) Int. Cl.⁵ : **B29C 53/74,** B29C 53/12,
**B29C 67/14**

(21) Numéro de dépôt : **88402776.4**

(22) Date de dépôt : **04.11.88**

(54) **Procédé et dispositif pour fabriquer en continu des barres incurvées à section à l'aide d'une bande intermédiaire.**

(30) Priorité : **09.11.87 FR 8714965**

(43) Date de publication de la demande :
**17.05.89 Bulletin 89/20**

(45) Mention de la délivrance du brevet :
**21.08.91 Bulletin 91/34**

(84) Etats contractants désignés :
**BE DE FR GB IT**

(56) Documents cités :
**EP-A- 0 033 798**
**DE-A- 2 519 621**
**FR-A- 2 596 695**

(73) Titulaire : **INSTITUT FRANCAIS DU PETROLE**
**4, Avenue de Bois-Préau**
**F-92506 Rueil-Malmaison Cédex (FR)**

(72) Inventeur : **Huvey, Michel**
**2, avenue des Pinsons**
**F-78380 Bougival (FR)**

EP 0 316 220 B1

## Description

La présente invention concerne un perfectionnement aux appareillages de fabrication en continu de corps à section profilée en matière stabilisable armée. Ces appareillages comprennent notamment en combinaison un mandrin entraîné en rotation autour d'un axe longitudinal et un support enroulé hélicoïdalement sur ce mandrin. Ces corps à section profilée peuvent notamment être des barres incurvées en matière stabilisable armée.

De telles barres sont utilisables pour l'élaboration d'arbres rigides ou flexibles, tels que des tubes, résistant aux efforts différentiels de pression, de traction, de compression, de torsion ou de flexion.

Par matière stabilisable, on entend les corps pouvant prendre une forme stable par un processus physique ou chimique, tel que fusion avec refroidissement, ou réticulation. Ces matériaux peuvent être, par exemple, des matériaux thermoplastiques, des matériaux thermodurcissables, des élastomères, ou des métaux.

Des techniques antérieures de fabrication de barres profilées au moyen d'un mandrin et d'un profilé creux sont, par exemple, décrites dans les brevets US-A-3.966.388 et FR-A-2.312.356, ou dans la demande de brevet française EN. 86/05.093 qui concerne un support moulant simultanément plusieurs barres.

Cependant, l'utilisation industrielle de ces techniques accuse un manque de souplesse du dispositif de fabrication, qui se traduit notamment par une irrégularité d'avancement du support-moule sur le mandrin et dont l'effet néfaste est accru lorsque la cadence de fabrication et/ou la longueur du mandrin croissent.

La longueur du mandrin dépend notamment du temps nécessaire à la stabilisation de la matière constitutive des barres. En général, cette longueur croît relativement autant que la vitesse de rotation du mandrin, elle-même fonction croissante de la cadence de fabrication.

L'emploi de fours de stabilisation de grande longueur autorise l'utilisation de matière à stabilisation lente, telle des résines peu réactives, et permet ainsi de bénéficier de nombreux avantages liés à cette matière, telle que la préréticulation.

Cette irrégularité d'avancement s'accompagne de blocages du support et/ou du profilé lors de l'enroulage du support sur le mandrin, ou lors de sa progression, ou encore lors de son évacuation.

Ces blocages peuvent entraîner des déformations des profilés et plus particulièrement des barres incurvées qui produisent des contraintes néfastes lors de leur utilisation, notamment lors de leur mise en place définitive, pour la fabrication de tubes.

La présente invention propose un procédé pour fabriquer en continu des barres incurvées à section profilée, en matière stabilisable armée, produites à l'intérieur d'un moule-support que l'on enroule autour d'un mandrin et dans lequel on dispose des éléments de renforcement imprégnés de matière stabilisable, puis on procède à la stabilisation de la matière sur au moins une partie de la longueur du mandrin.

Le procédé est notamment caractérisé en ce qu'on enroule en continu sur le mandrin, à une première de ses extrémités, une bande intermédiaire sur laquelle on enroule le moule-support et en ce qu'on dégage du mandrin la bande intermédiaire, à une seconde extrémité du mandrin.

Ainsi, grâce à cette bande intermédiaire coopérant avec le moule-support, les risques de chevauchements et de blocages des spires du moule-support sont très atténués, les frottements longitudinaux du moule-support (maintenant de la bande intermédiaire) sont réduits, l'entraînement circonférentiel du profilé par effet de cabestan est mieux régulé, et l'entraînement longitudinal, produit par l'insertion du support entre la rampe du mandrin et la dernière spire de support introduite, est beaucoup plus stable. La longueur du mandrin peut être élevée sans risque pour la production.

A titre d'exemple, lorsque l'on produisait des barres profilés dans un moule-gorge sans utiliser de bande intermédiaire, la longueur moyenne des barres fabriquées entre deux incidents de fabrication nécessitant un arrêt de la fabrication était de 500 mètres environ, alors qu'avec le procédé selon l'invention utilisant la bande intermédiaire, on a produit 4.500 mètres de profilé sans aucun incident.

Lorsque la bande intermédiaire forme une succession de spires, on pourra placer le moule à cheval sur deux spires consécutives de la bande intermédiaire.

La bande intermédiaire que l'on utilise pourra être sensiblement cintrée à la courbure du mandrin.

On pourra recycler en continu la bande intermédiaire ainsi dégagée de ladite seconde extrêmité à ladite première extrêmité.

On pourra utiliser comme bande intermédiaire le moule-support. comportant les éléments de renforcement imprégnés de matière stabilisée qui forment lesdites barres.

La largeur du moule-support pourra être au plus égale à la largeur de la bande intermédiaire.

La présente invention propose en outre un appareillage pour fabriquer en continu des barres incurvées à sections profilées, cet appareillage comprenant en combinaison un mandrin, des moyens entraînant ce mandrin en rotation autour de son axe longitudinal, un moule-support hélicoïdal adapté à être enroulé autour du mandrin et ayant une section correspondante à celle du profilé à obtenir, des moyens d'enroulement en continu du moule-support, des moyens d'enroulement en continu d'éléments de renforcement imprégnés de matière stabilisable, des moyens de stabilisation disposés sur une partie au moins de la longueur du mandrin, des moyens pour séparer du mandrin la matière profilée et armée ayant subi au moins partiellement la stabilisation.

Cet appareillage est notamment caractérisé en ce qu'il comporte en outre une bande intermédiaire hélicoïdale disposée entre le mandrin et le moule-support, des moyens d'enroulement en continu de la bande intermédiaire, des moyens pour faire progresser longitudinalement la bande sur ledit mandrin, des moyens pour séparer du mandrin la bande intermédiaire.

Lorsque la bande intermédiaire forme une succession de spires, l'appareillage pourra comporter des moyens pour disposer le moule-support à cheval sur deux spires consécutives de la bande intermédiaire.

La bande intermédiaire pourra coopérer avec le moule-support pour entraîner ce dernier en rotation.

La bande intermédiaire pourra être une bande cintrée dont la courbure pourra être sensiblement égale à celle du mandrin.

La bande intermédiaire pourra comporter un profilé en matière stabilisée armée.

Le mandrin pourra comporter une première zone surélevée, ou portée de calibrage, sur laquelle vient s'enrouler la bande intermédiaire, la portée ayant une longueur suffisante pour entraîner la bande par effet de cabestan et ayant une longueur limitée pour ne pas entraver la progression de ladite bande sur le mandrin.

La bande intermédiaire pourra comporter des moyens, tels un épaulement central, adaptés à maintenir le moule-support à cheval sur la bande.

L'invention sera bien comprise et ses avantages apparaîtront clairement à la lecture de la description suivante illustrée par les figures annexées, parmi lesquelles :

— la figure 1 illustre schématiquement l'appareillage de fabrication de barres cintrées, en cours de fonctionnement,

— la figure 2 montre en coupe le même appareillage que celui schématisé à la figure 1,

— la figure 3 représente partiellement en coupe une bande intermédiaire relativement à un moule-support, et

— la figure 4 représente partiellement en coupe une bande intermédiaire constituée du profilé obtenu avec un moule-support relativement au profilé avec un moule-support en cours fabrication.

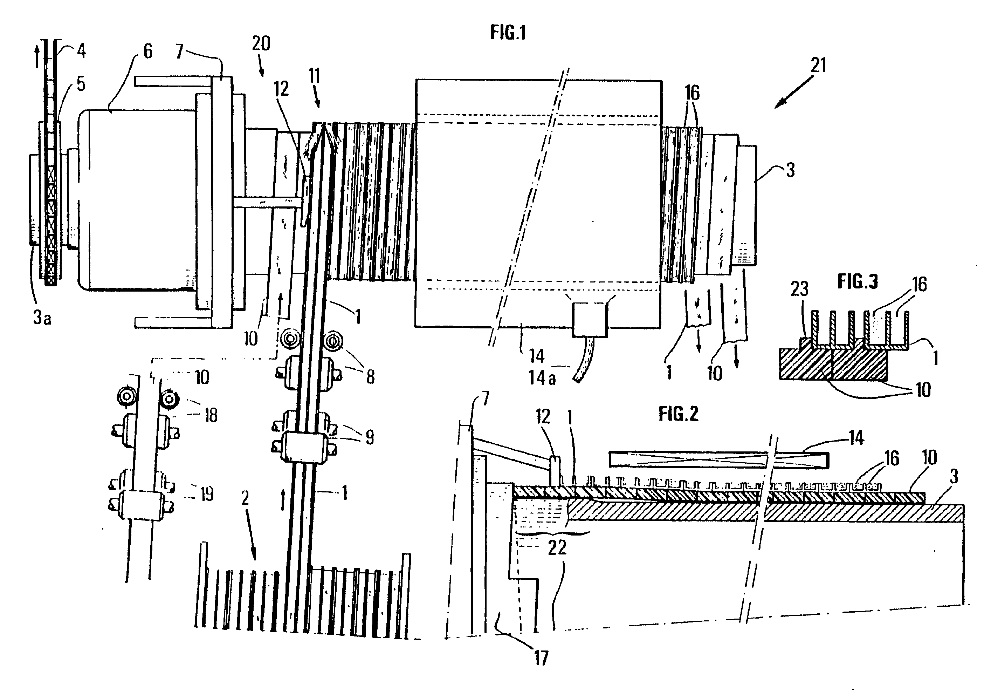

Sur les figures 1 à 3, la référence 10 désigne une bande intermédiaire qui est bobinée sur un tambour ou mandrin 3. L'arbre 3a du tambour 3 est relié à des moyens d'entraînement en rotation de ce tambour, qui comporte par exemple une chaîne 4 engrenant sur un pignon denté 5 calé sur l'arbre 3a.

L'arbre 3a repose sur le palier 6 par l'intermédiaire de roulement, ce palier étant solidaire d'un chassis 7.

Avant d'être bobiné sur le mandrin 3, la bande intermédiaire passe entre les galets de guidage 18 et de tension 19.

Une rampe 17 coopérant avec les galets de guidage 18 et de tension 19 assure le positionnement correct de la bande intermédiaire 10 à une première extrêmité 20 du mandrin, de manière que son enroulement hélicoïdal soit convenable. Ainsi, les moyens d'enroulement en continu de la bande intermédiaire sur le mandrin comportent les galets de guidage 18 et de tension 19 et la rampe 17. La rampe 17 sert en outre à faire progresser longitudinalement la bande 10 sur ledit mandrin 3.

La bande intermédiaire 10, entraînée par effet de cabestan à l'aide du mandrin 3, parcourt ce dernier jusqu'à sa deuxième extrêmité 21 ou la bande intermédiaire 10 est dégagée du mandrin 3.

Sur toute la longueur du mandrin, les spires de la bande intermédiaire 10 sont sensiblement jointives. Le mandrin 3 comporte une portée de calibrage 22, d'un diamètre supérieur à celui du mandrin 3 dans sa longueur courante. La longueur de cette portée est, par exemple, comprise entre 10 et 40 fois la largeur de la bande intermédiaire. L'utilisation d'une telle portée 22 est, par exemple, décrite dans la demande de brevet français EN. 87/08.329. Pour plus de clarté dans la compréhension de la figure 1, la portée de calibrage n'est pas représentée à l'échelle réelle.

Sur la bande intermédiaire 10 est bobiné, dans le même sens que la bande intermédiaire 10, un support profilé évidé 1. Ce support 1 sert de moule à la fabrication en continu des barres incurvées à section profilée.

Le support 1, qui provient d'une bobine de stockage 2, passe au travers de galets de guidage 8 et de tension 9 avant d'être positionné, au moyen d'une pièce-guide 12, à cheval sur la bande intermédiaire 10.

Les moyens d'enroulement en continu du moule-support 1 sur la bande intermédiaire 10 comportent les galets de guidage 8 et de tension 9 et la pièce-guide 12.

Le support 1 représenté comporte plusieurs gorges longitudinales qui, au fur et à mesure de l'enroulement sur le mandrin 3 sont remplies de filaments 11 à haute résistance, ou rovings, préalablement imprégnés d'une matière plastique stabilisable, capable ou non d'adhérer aux parois internes des gorges, selon leur position dans le support et selon le but recherché, et capable d'adhérer auxdits filaments, ce mélange de filaments et de matière stabilisable formant les noyaux 16 du support profilé qui deviendront, après extraction, les barres cintrées armées.

Le support 1 appelé aussi moule-support ou encore moule profilé, ainsi garni, passe ensuite dans un four 14 où il est soumis à un traitement thermique capable de stabiliser la matière plastique armée qu'il renferme.

Le four 14 est alimenté en énergie par tout moyen approprié, tel que, par exemple, le câble 14a, si l'on utilise des moyens de chauffage électriques.

Le moule 1 garni des filaments 11 peut être éventuellement recouvert d'un élément formant couvercle. Cet élément pourra être constitué d'un ruban en matière plastique, ou bien d'un élément profilé dont la section est adaptée à permettre son emboîtement sur le moule avant le traitement thermique dans le four 14, comme indiqué dans le brevet FR-2.494.401, ou encore la demande de brevet français EN.86/05.096.

On peut également, à la deuxième extrêmité 21 du mandrin 3, après avoir procédé à la stabilisation de la matière plastique, extraire du moule profilé 1, les barres incurvées profilées 16 qui sont formées par moulage. On réalise, par exemple, cette extraction en un point situé à la sortie du mandrin, en courbant le moule 1 grâce à des galets comme indiqué dans la demande de brevet français EN 86/05.096.

Les barres incurvées armées 16 extraites du moule 1 sont dirigées vers un lieu de stockage ou d'utilisation. Quant au moule 1, il peut être soit stocké, soit réutilisé en continu, après passage dans un dispositif de nettoyage du moule 1 par un moyen convenable. On peut aussi utiliser le moule-support comportant les noyaux ou barres incurvées 16, de manière à réaliser une barre incurvée à plusieurs noyaux.

A titre d'exemple non limitatif, on a réalisé un support creux ayant deux gorges formant deux moules identiques de section rectangulaire 5 mm × 7 mm et une épaisseur des parois externes et des cloisons internes de 1 mm. Ce support pourra être fabriqué en polyamide 11 (généralement désigné par la marque de fabrique Rilsan) par un procédé d'extrusion classique. Le support 1 dont la largeur fait par suite 17 mm est supporté par une bande intermédiaire 10 d'une largeur de 18 mm.

La largeur du moule-support 1 sera avantageusement inférieure à celle de la bande intermédiaire 10, de manière à faciliter la progression du moule-support 1 et de la bande intermédiaire 10 sur la surface du mandrin et à placer symétriquement, à cheval, le moule-support sur la bande intermédiaire.

Cette bande intermédiaire 10, qui est résistante à l'abrasion, est par exemple constituée d'un profilé composite dont toutes les faces extérieures comportent du Rilsan et dont le noyau interne, qui est cintré, comporte des filaments de verre noyés dans une résine stabilisée. De telles bandes peuvent être réalisées, par exemple, au moyens du procédé décrit dans le brevet 2.494.401 et qui sert à la fabrication de profilés cintrés résistants à l'abrasion.

Une autre bande intermédiaire, qui a été utilisé avec satisfaction en production, est par exemple constituée d'un profilé d'acier recouvert d'une couche de Rilsan pour résister à l'abrasion.

On a garni les gorges du support d'un mélange de 70 parties en poids de mèches continues de fibres de verre unidirectionnelles, non tordues et de 30 parties en poids d'un mélange de résine époxyde du type diglycidyléther de bisphénol A (100 parties) et de 4,4' diaminodiphényl méthane (27 parties en poids).

L'effet de cabestan nécessaire à l'entraînement du support en rotation avec la bande intermédiaire 10 est produit par une traction suffisante du moule-support 1 et/ou des rovings 11.

Le freinage des bobines de rovings initialement stockées sur un cantre peut, par exemple, assurer de manière constante cette traction.

L'introduction du moule-support 1 à une première extrêmité du mandrin contre la pièce guide 12, produit un déplacement en translation de l'ensemble des spires du support 1 sur la bande intermédiaire 10, vers la deuxième extrêmité 21 du mandrin 3.

La bande intermédiaire 10, qui est enroulée à une première extrêmité 20 du mandrin et déroulée à une deuxième extrêmité 21 peut être recyclée en permanence entre la sortie du mandrin au niveau de la deuxième extrêmité 21 et l'entrée sur le mandrin 3 au niveau de la première extrêmité.

Pour faciliter la séparation du mandrin de la bande intermédiaire 10, à la deuxième extrêmité du mandrin 3, des galets tels que décrits dans le brevet français 2.312.356 peuvent être placés à cette deuxième extrêmité.

De la même manière, le moule-support pourra être séparé de la bande intermédiaire par d'autres galets du même type.

Après passage dans le four 14, les noyaux 16 du support profilé 1 éventuellement avec ledit support 1, quittent le mandrin 3, et la spirale obtenue peut être utilisée en tant qu'élément de renfort pour réaliser une conduite légère résistante.

Pour favoriser le glissement, notamment sur la portée de calibrage 22, il est nécessaire que le contact entre la bande intermédiaire et le mandrin soit glissant et, en dépit des gouttes de résine les atteignant, le reste tout au long de l'opération qui peut durer des mois, vingt quatre heures sur vingt quatre, pour des fabrications importantes. On parvient à cet objectif en revêtant le mandrin de TEFLON dur et/ou en lubrifiant les surfaces de frottement.

La bande intermédiaire pourra comporter des moyens pour maintenir le moule-support sur la bande 10. Ces moyens peuvent, par exemple, être un épaulement central 23 (Fig. 3), de part et d'autre duquel se positionne le moule-support 1.

On pourra utiliser comme bande intermédiaire le moule-support comprenant les noyaux 16 venant d'être fabriqués. Pour ce faire, on commence à produire les noyaux 16 à l'aide d'une bande intermédiaire auxiliaire jusqu'à ce qu'à ce que ces noyaux 16 atteignant la deuxième extrémité 21 du mandrin la dépasse suffisamment pour être introduit à la première extrêmité 20 du mandrin à la suite de la bande intermédiaire auxiliaire. Cette disposition a notamment pour avantage de supprimer le remplacement fréquent de la bande intermédiaire du fait de son usure. Lors de l'extraction de la bande intermédiaire à la sortie du mandrin, on peut séparer le moule-gorge du profilé. Le moule-gorge peut alors être recyclé dans la fabrication du profilé et le profilé peut être stocké.

Du fait que sur le mandrin, la différence de diamètres existant entre celui de la bande intermédiaire et celui du support-moule, il se produit un accroissement de la longueur libre du support-moule entre sa fin de fabrication à la deuxième extrêmité du mandrin et son insertion comme bande intermédiaire à la première extrêmité. Cet accroissement est absorbé par un tendeur qui assure une régularité dans l'extraction du moule-support et sa réinsertion en tant que bande intermédiaire. On pourra aussi utiliser comme bande intermédiaire le moule-support n'ayant pas encore servi à produire les noyaux 16 ou barres cintrées.

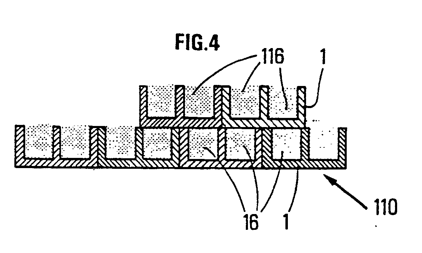

La figure 4 représente partiellement en coupe une bande intermédiaire 110, constituée du profilé 16 obtenu avec le moule-support 1, et qui est disposée sous le profilé 116 en cours de fabrication dans le moule-support 1.

La bande intermédiaire, pourra être réalisée à partir d'une bande de métal, de préférence un métal ayant une résistance élevée à l'élasticité.

Pour éviter une usure rapide du mandrin et de la bande, notamment la bande de métal, la bande intermédiaire pourra comporter un revêtement antiabrasion, tel un revêtement de Rilsan.

## Revendications

1. Procédé pour fabriquer en continu des barres incurvées à section profilée, en matière stabilisable armée, produites à l'intérieur d'un moule-support (1) que l'on enroule autour d'un mandrin (3) et dans lequel on dispose des éléments de renforcement (11) imprégnés de matière stabilisable, puis on procède à la stabilisation de la matière sur au moins une partie de la longueur du mandrin, caractérisé en ce qu'on enroule, en continu sur ledit mandrin (3) à une première de ses extrêmités (20) une bande intermédiaire (10) sur laquelle on enroule ledit moule-support (1), et on dégage dudit mandrin (3) ladite bande intermédiaire (10), en une seconde extrêmité (21) du mandrin.

2. Procédé selon la revendication 1, dans lequel ladite bande intermédiaire (10) forme une succession de spires, caractérisé en ce qu'on place ledit moule (1) à cheval sur deux spires consécutives de ladite bande intermédiaire (10).

3. Procédé selon l'une des revendications 1 et 2 caractérisé en ce que la bande intermédiaire (10) que l'on utilise est sensiblement cintrée à la courbure du mandrin.

4. Procédé selon l'une des revendications 1 à 3, caractérisé en ce qu'on recycle en continu ladite bande intermédiaire (10) ainsi dégagée de ladite seconde extrêmité (21) à ladite première extrêmité (20).

5. Procédé selon l'une des revendications 1 à 3, caractérisé en ce qu'on utilise comme bande intermédiaire (10) le moule-support (1) comportant les éléments de renforcement imprégnés de manière stabilisée qui forment lesdites barres.

6. Procédé selon l'une des revendications 1 à 5, caractérisé en ce que la largeur du moule-support (4) est au plus égale à la largeur de la bande intermédiaire (10)

7. Appareillage pour fabriquer en continu des barres incurvées à sections profilées, l'appareillage comprenant en combinaison un mandrin (3), des moyens entraînant ce mandrin en rotation (5, 4) autour de son axe longitudinal, un moule-support (1) hélicoïdal adapté à être enroulé autour du mandrin (3) et ayant une section correspondante à celle du profilé à obtenir, des moyens d'enroulement (8, 9, 12) en continu du moule-support, des moyens d'enroulement en continu d'éléments (11) de renforcement imprégnés de matière stabilisable, des moyens de stabilisation (14) disposés sur une partie au moins de la longueur du mandrin (3), des moyens pour séparer du mandrin (3) la matière profilée et armée ayant subi au moins partiellement la stabilisation, l'appareillage est caractérisé en ce qu'il comporte en outre une bande intermédiaire (10) hélicoïdale disposée entre ledit mandrin (3) et ledit moule-support (1), des moyens d'enroulement (17, 18, 19) en continu de ladite bande intermédiaire (10) des moyens (17) pour faire progresser longitudinalement ladite bande sur ledit mandrin (3), des moyens pour séparer du mandrin (3) ladite bande intermédiaire (10).

8. Appareillage selon la revendication 7, dans lequel la bande intermédiaire (10) forme une succession de spires, caractérisé en ce qu'il comporte des moyens pour disposer ledit moule-support (1) à cheval sur deux spires consécutives de ladite bande intermédiaire (10).

9. Appareillage selon l'une des revendications 7 et 8, caractérisé en ce que ladite bande intermédiaire (10) est adaptée à coopérer avec ledit moule-support (1) pour entraîner en rotation ce dernier.

10. Appareillage selon l'une des revendications 7 à 9, caractérisé en ce que ladite bande intermédiaire (10) est une bande cintrée dont la courbure est sensiblement égale à celle du mandrin (3).

11. Appareillage selon l'une des revendications 7 à 10, caractérisé en ce que ladite bande intermédiaire (10) est un profilé en matière stabilisée armée.

12. Appareillage selon l'une des revendications 1 à 4 et 10, caractérisé en ce que ladite bande intermédiaire est une bande métallique.

13. Appareillage selon l'une des revendications 1 à 12, caractérisé en ce que ladite bande intermédiaire comporte un revêtement antiabrasion.

14. Appareillage selon l'une des revendications 7 à 13, caractérisé en ce que ledit mandrin comporte une première zone surélevée (22) ou portée de calibrage sur laquelle vient s'enrouler ladite bande intermédiaire (10), ladite portée (22) ayant une longueur suffisante pour entraîner ladite bande (10) par effet de cabestan et ayant une longueur limitée pour ne pas entraver la progression de ladite bande (10) sur le mandrin (3).

15. Appareillage selon l'une des revendications 7 à 14, caractérisé en ce que ladite bande intermédiaire (10) comporte des moyens, tels un épaulement central, adaptés à maintenir à cheval ledit moule-support (1) sur ladite bande (10).

## Patentansprüche

1. Verfahren zur kontinuierlichen Herstellung gekrümmter Stäbe mit Profilquerschnitt aus armiertem stabilisierbarem Material, hergestellt im Inneren eines Form-Trägers (1), den man um ein Dorn (3) wickelt und in welchem man mit stabilisierbarem Material imprägnierte Verstärkungselemente (11) anordnet, dann die Stabilisierung des Materials über wenigstens einen Teil der Länge des Dorns vornimmt, dadurch gekennzeichnet, daß man kontinuierlich auf diesen Dorn (3) an einem ersten seiner Enden (20) ein Zwischenband (10) wickelt, auf das man diesen Form-Träger (1) wickelt und daß man von diesem Dorn (3) dieses Zwischenband (10) an einem zweiten Ende (21) des Dorns freigibt.

2. Verfahren nach Anspruch 1, wobei dieses Zwischenband (10) eine Aufeinanderfolge von Spiralen bildet, dadurch gekennzeichnet, daß man diese Form (1) rittlings auf zwei aufeinanderfolgenden Spiralen dieses Zwischenbandes (10) anordnet.

3. Verfahren nach einem der Ansprüche 1 und 2, dadurch gekennzeichnet, daß das Zwischenband (10), welches man verwendet, im wesentlichen auf die Wölbung des Dorns gekrümmt wird.

4. Verfahren nach einem der Ansprüche 1 bis 3, dadurch gekennzeichnet, daß man kontinuierlich dieses so vom zweiten Ende (21) freigegebene Zwischenband (10) zum ersten Ende (20) zurückführt.

5. Verfahren nach einem der Ansprüche 1 bis 3, dadurch gekennzeichnet, daß man als Zwischenband (10) den Form-Träger (1) verwendet, der die mit stabilisiertem Material imprägnierten Verstärkungselemente, welche diese Stäbe bilden, umfaßt.

6. Verfahren nach einem der Ansprüche 1 bis 5, dadurch gekennzeichnet, daß die Breite des Form-Trägers (4) höchstens gleich der Breite des Zwischenbandes (10) ist.

7. Vorrichtung zur kontinuierlichen Herstellung gekrümmter Stäbe mit Profilquerschnitt, wobei die Vorrichtung in Kombination einen Dorn (3) umfaßt, Mittel, die diesen Dorn (5, 4) um seine Längsachse in Drehung versetzen, einen spiralförmigen Form-Träger (1), der so ausgelegt ist, daß er um den Dorn (3) gewickelt werden kann und einen Querschnitt entsprechend dem des zu erhaltenen Profils hat, Mittel zum kontinuierlichen Wickeln (8, 9, 12) des Form-Trägers, Mittel zum kontinuierlichen Wickeln von mit stabilisierbarem Material imprägnierten Verstärkungselementen (11), Mittel zum Stabilisieren (14), die auf wenigstens einen Teil der Länge des Dorns (3) angeordnet sind, Mittel, um vom Dorn (3) das profilierte und armierte Material zu trennen, welches wenigstens teilweise die Stabilisierung erfahren hat, wobei die Vorrichtung sich dadurch auszeichnet, daß sie im übrigen ein spiralföriges Zwischenband (10) umfaßt, das zwischen diesem Träger (3) und dem Form-Träger (1) angeordnet ist, Mittel (17, 18, 19) zum kontinuierlichen Wickeln dieses Zwischenbandes (10), Mittel (17), um in Längsrichtung das Band auf diesem Dorn (3) sich vorschieben zu lassen und Mittel, um vom Dorn (3) dieses Zwischenband (10) zu trennen.

8. Vorrichtung nach Anspruch 7, bei dem das Zwischenband (10) eine Aufeinanderfolge von Spiralen bildet, dadurch gekennzeichnet, daß es Mittel umfaßt, um diesen Formträger (1) rittlings auf zwei aufeinanderfolgenden Spiralen des Zwischenbandes (10) anzuordnen.

9. Vorrichtung nach einem der Ansprüche 7 und 8, dadurch gekennzeichnet, daß dieses Zwischenband (10) so ausgelegt ist, daß es mit diesem Formträger (1), um letzteren in Drehung zu versetzen, zusammenwirkt.

10. Vorrichtung nach einem der Ansprüche 7 bis 9, dadurch gekennzeichnet, daß dieses Zwischenband (10) ein gewölbtes Band ist, dessen Krümmung im wesentlichen gleich der des Dorns (3) ist.

11. Vorrichtung nach einem der Ansprüche 7 bis 10, dadurch gekennzeichnet, daß dieses Zwischenband (10) ein Profil aus armiertem stabilisiertem Material ist.

12. Vorrichtung nach einem der Ansprüche 1 bis 4 und 10, dadurch gekennzeichnet, daß das Zwischenband ein metallisches Band ist.

13. Vorrichtung nach einem der Ansprüche 1 bis 12, dadurch gekennzeichnet, daß das Zwischenband einen Antiabrasivüberzug trägt.

14. Vorrichtung nach einem der Ansprüche 7 bis 13, dadurch gekennzeichnet, daß dieser Dorn eine erste erhöhte Zone (22) bzw. Kalibrierungsauflager umfaßt, auf welches sich dieses Zwischenband (10) wickelt, wobei das Auflager (22) eine ausreichende Länge hat, um dieses Band (10) durch Cabestaneffekt anzutreiben und eine begrenzte Länge hat, um den Vorschub dieses Bandes (10) auf dem Dorn (3) nicht zu beeinträchtigen.

15. Vorrichtung nach einem der Ansprüche 7 bis 14, dadurch gekennzeichnet, daß dieses Zwischenband (10) Mittel, beispielsweise eine mittige Schulter, aufweist, derartiger Auslegung, daß dieser Form-Träger (1) auf diesem Band (10) rittlings gehalten wird.

## Claims

1. Method for the continuous manufacture of curved bars of profiled section, using a reinforced material capable of being stabilised, produced within a supporting mould (1) which is wound around a mandrel (3) and in which are positioned reinforcing elements (11) impregnated with a stabilising material, following which the material is stabilised over at least part of the length of the mandrel, characterised in that an intermediate strip (10) is continuously wound onto the said mandrel (3) at the first of its ends (20) and onto which the said supporting mould (1) is wound, the said intermediate strip (10) being removed from the said mandrel (3) at the second end (21) of the mandrel.

2. Method in accordance with claim 1, in which the said intermediate strip (10) forms a succession of spiral turns, characterised in that the said mould (1) is located centrally so that it is positioned over and contacts two consecutive spiral turns of the said intermediate strip (10).

3. Method in accordance with one of claims 1 and 2, characterised in that the intermediate strip (10) used is basically formed to the curvature of the mandrel.

4. Method in accordance with one of claims 1 to 3, characterised in that the said intermediate strip (10) is continuously recycled, when removed, from the said second end (21) to the said first end (20).

5. Method in accordance with one of claims 1 to 3, characterised in that the supporting mould (1) is used as the intermediate strip (10), this including the stabilised and impregnated reinforcing elements which form the said bars.

6. Method in accordance with one of claims 1 to 5, characterised in that the width of the supporting mould (4) does not exceed the width of the intermediate strip (10).

7. Installation for the continuous manufacture of curved bars of profiled section, the installation comprising, in combination, a mandrel (3), a means of diving this mandrel in rotation (5, 4) about its longitudinal axis, a helical supporting mould (1) designed to be wound around the said mandrel (3) and having a cross section corresponding to that of the profile to be obtained, a means (8, 9, 12) of continuously winding the supporting mould, a means of continuously winding the reinforcing elements (11) impregnated with a stabilising material, a means of stabilisation (14) positioned over at least part of the length of the mandrel (3), a means to separate from the mandrel (3) the profiled and reinforced material having been subjected at least partially to stabilisation, the installation being characterised in that it also comprises a helical intermediate strip (10) positioned between the said mandrel (3) and the said supporting mould (1), a means (17, 18, 19) of continuously winding the said intermediate strip (10), a means (17) of longitudinally progressing the said strip over the said mandrel (3) and a means of separating the said intermediate strip (10) from the said mandrel (3).

8. Installation in accordance with claim 7, characterised in that the intermediate strip (10) forms a succession of spiral turns and in that it compares a means of positioning the said supporting mould (1) so that it is placed centrally over two consecutive spiral turns of the said intermediate slip (10).

9. Installation in accordance with one of claims 7 and 8, characterised in that the said intermediate strip (10) is designed to co-operate with the said supporting mould (1) in order to impart rotation to this latter.

10. Installation in accordance with one of claims 7 to 9, characterised in that the said intermediate strip (10) is a strip formed so that its curvature is basically equal to that of the mandrel (3).

11. Installation in accordance with one of claims 7 to 10, characterised in that the said intermediate strip (10) is a profiled section made from a reinforcing material capable of stabilisation.

12. Installation in accordance with one of claims 1 to 4 and 10, characterised in that the said intermediate strip is a metal strip.

13. Installation in accordance with one of claims 1 to 12, characterised in that the said intermediate strip includes an anti-abrasion coating.

14. Installation in accordance with one of claims 7 to 13, characterised in that the said mandrel comprises a first raised zone (22) or sizing zone on which the said intermediate strip (10) is wound, the said zone (22) being of sufficient length to drive the said strip (10) due to the capstan effect and having a limited length so that it does not impede the progression of the said strip (10) over the mandrel (3).

15. Installation in accordance with one of claims 7 to 14, characterised in that the said intermediate strip (10) includes a means, such as a central shoulder, designed to maintain the said supporting mould (1) positioned centrally over the said strip (10).

**FIG.1**

**FIG.3**

**FIG.2**

EP 0 316 220 B1

**FIG.4**